# EUROPEAN PATENT APPLICATION

(11) **EP 4 257 340 A1**
(43) Date of publication of application: **11.10.2023**
(21) Application number: 22167510.1
(22) Date of filing: 08.04.2022
(51) Int. Cl.: B29C 64/124, B29C 64/129, B29C 64/277, B33Y 30/00

(54) **METHOD AND APPARATUS FOR HIGH-RESOLUTION FAST LAYER-BY-LAYER 3D PRINTING**

(71) Applicant: Photosynthetic B.V., 1081 HV Amsterdam (NL)
(72) Inventor: Kostenko, Alexander, 1081HV Amsterdam (NL); van Vliet, Wesley, 1081HV Amsterdam (NL); Laagland, Mark, 1081HV Amsterdam (NL); Narayanan, Aditya, 1081HV Amsterdam (NL)
(74) Representative: Hoyng Rokh Monegier B.V.

(57) **Abstract**

The present invention discloses a photolithography apparatus and method for forming a three-dimensional structure inside a photosensitive material configured to activate photochemical reactions according to a predetermined pattern in a layer inside the photosensitive material. A stage holds the volume of photosensitive material. A light source system produces an excitation beam of a first wavelength and a depletion beam of a second wavelength. A light modulation system forms one or more modulated images using the excitation beam and the depletion beam. An optical system focuses the one or more modulated images in a focal plane positioned inside the three-dimensional volume of photosensitive material. The focused one or more modulated images generate the predetermined pattern comprising one or more excitation regions and one or more depletion regions in the focal plane, selectively activating a photochemical reaction localized to a thin layer of the photosensitive material in the vicinity the focal plane.

## Description

### TECHNICAL FIELD

This disclosure generally relates to three-dimensional photolithography. More specifically, but not exclusively, it relates to methods and apparatuses for rapid fabrication of three-dimensional structures within a volume of photosensitive materials or photoresists.

### BACKGROUND

Photopolymerization (also referred as photochemical reaction herein) techniques such as single-photon and multiphoton lithography allow for high-resolution 3D printing using optical beams. Printing relies on photochemical reactions of photosensitive materials, also known as photopolymer, resin, resist, photoresin or photoresist.

Depending on the type, positive or negative, the photopolymer reacts to light and generates or removes cross-linked, solidified polymers respectively. During photopolymerization, a photoinitiator molecule absorbs one or more photons which excites its electron from a ground energy state to an excited energy state, producing a radical. In negative tone photoresists, the produced radicals initiate a chain reaction of polymerization which leads to formation of cross-linked polymer chains, hence curing or solidifying the photoresist. In such a negative tone polymerization process, a volume of liquid photoresist is processed into a solid, cross-linked polymer. Contrarily, in positive tone photoresist, the produced radicals drive a chemical reaction that dissolves the photoresist. In other words, a solid state photoresist is processed to become a soluble liquid. It is noted that the term 'polymerization' in this document is used for indicating the photochemical reactions relating to both positive and negative tone photoresists.

Among various photopolymerization techniques, two-photon polymerization (TPP), two-photon lithography (TPL) or two-photon absorption (TPA) is widely used for printing 3D structures at the microscale. The top lateral resolution of TPP is around 100 nanometers. Due to its high resolution and the 3D nature, TPP is emerging as a novel microfabrication technique differentiated from conventional 2D microfabrication techniques such as e-beam lithography. However, TPP requires a large number of photons to be densely focused within a small volume to ensure a sufficient two-photon absorption rate. In other words, the photon density has to be large enough to ensure two photons can be absorbed by an electron of a molecule within a few femtoseconds (e.g. 10⁻¹⁵-10⁻¹⁴ seconds). This requires a high-power, ultra-short pulse laser which are costly. Since a high number of photons are required to initiate TPP, this technique ensures that the light of the laser is virtually not causing photopolymerization along its beam path except the focal spot where the number of photons is largest, avoiding any unwanted polymerization.

Even though the focal spot of a TPP printer, where the photochemical reaction is produced, can scan a 3D space in a extremely high linear speed -500 mm/s the point-by-point nature of TPP still makes the technique inherently slow (e.g. volumetric speed ~0.1-10 mm³/hour). The focal point of the optical beam has to be scanned throughout a layer and move to the next layer.

Another downside of TPP is that it requires costly high-power, ultra-short pulse lasers usually having a pulse duration of tens of femtoseconds.

*Hahn et al, "Two-step absorption instead of two-photon absorption in 3D nanoprinting", Nat. Photon. 15, 932-938 (2021)* suggests two-step absorption (TSA) as an alternative photochemical reaction which can overcome the downsides of TPP but can maintain the high resolution feature. More specifically, TSA can reduce the cost on light source systems significantly because it does not require a very strong light intensity as in TPP. In TSA, the first photon absorbed by a radical molecule generates an intermediate state that lasts much longer than that of TPP so that the chance of interaction with a second photon is higher. The second photon may have the same wavelength as the first photon or a different wavelength depending on the type of photoinitator. As in TPP, the number of radicals generated is proportional to *I*², or *I*₁ ∗ *I*₂ when using different wavelengths. However, due to the longer duration time of the intermediate energy state, the illumination intensity required for TSA is significantly lower than TPP.

Another 3D printing technique widely used is stereolithography (SLA). In SLA, photochemical reaction is initiated via a *single-photon absorption* of light of UV to blue wavelength that is focused at the surface layer of an opaque photopolymer. Rapid absorption of light in the first 10-100 microns of a sufficiently opaque photopolymer ensures confinement of the photochemical reaction to that relatively thin layer without the *two-photon absorption* effect. Such process requires relatively low light intensities and allows to achieve printing speeds many orders of magnitude higher than in TPP (e.g. 10⁵-10⁷mm³/hour) at much lower cost. A modification of SLA based on Digital Light Processing (DLP) technology, known as DLP printing, can be used for printing 3D object in a layer-by-layer manner instead of point-by-point. The disadvantage of SLA/DLP is the limited resolution. Minimal printable feature size in SLA is around 25-50 micrometres which is not suitable for realizing 3D structures at the microscale.

A technical challenge in the field is to realize a cost-efficient, high-resolution and high-speed 3D printer, wherein the targeted resolution is preferred to be sub-micrometre.

### SUMMARY

To address the above discussed drawbacks of the prior art, there is proposed, according to a first aspect of the disclosure, a photolithography apparatus for forming a three-dimensional structure. The photolithography apparatus is configured to activate photochemical reactions according to a predetermined pattern in a layer inside a three-dimensional volume of photosensitive material. In contrast to the point-by-point scanning and printing configuration of 3D photolithography such as two-photon polymerization (TPP) lithography, the present invention uses a predetermined pattern to realize a layer-by-layer printing, which can enhance the printing speed significantly. The photolithography apparatus has a stage - which can be moveable - arranged to hold the volume of photosensitive material.

The photolithography apparatus further comprises a light source system arranged to produce an excitation beam, wherein the excitation beam comprises light of a first wavelength, wherein the photochemical reaction inside the volume of photosensitive material is activated by absorption of light of the first wavelength and further arranged to produce a depletion beam, wherein the depletion beam comprises light of a second wavelength, and wherein the photochemical reaction inside the volume of photosensitive material is deactivated by absorption of light of the second wavelength.

The photolithography apparatus further comprises a light modulation system arranged to form one or more modulated images using the excitation beam and the depletion beam. The one or more modulated images using the excitation beam and the depletion beam is advantageous over conventional TPP lithography in that the use of depletion beam ensures a high-resolution regardless of whether single-photon polymerization or two-photon polymerization is used. The depletion beam will effectively prevent a certain region of photosensitive material from undergoing photochemical reaction. By partially overlapping the excitation beam with the depletion beam of a sufficient intensity, the region where the photochemical reaction is occurring can be further reduced in size, hence maintaining the small feature size, in other words the high-resolution of printing. By adjusting the intensities of the excitation and depletion beam, the size of the region where photopolymerization takes place can be fine-tuned. This is due to the fact that both beams are diffraction limited and will, to some extent, overlap if projected in the vicinity of each other. That overlap can be increased by increasing the overall intensity of the depletion or the excitation beams, for instance.

An optical system is arranged within the photolithography apparatus to focus the one or more modulated images in a focal plane positioned inside the three-dimensional volume of photosensitive material. Subsequently the focused one or more modulated images generate the predetermined pattern comprising one or more excitation regions and one or more depletion regions in the focal plane, wherein each excitation region comprises light of the first wavelength and each of the depletion regions comprises light of the second wavelength. The optical system ensures the predetermined pattern is projected at a desired depth of the photosensitive material. The depth can be adjusted optically by the optical system which does not require the photochemical reaction to occur at a certain location for example at the surface of the photosensitive material which is the case for stereolithography (SLA) technique. The use of excitation and depletion beams is to avoid unwanted photochemical reaction in and outside the focal plane, ensuring the high-resolution feature and the accuracy of the printing.

In an embodiment of the first aspect, the modulated image can be modulated in intensity and/or in shape. In other words, the modulation can be intensity modulation and spatial modulation. The intensity distribution of the modulated image can be designed so that a certain area has a higher intensity than other area. The spatial modulation can be phase modulation or a modulation relates to any other spatial characteristics of the light beam for example angular momentum modulation.

In an embodiment of the first aspect, the predetermined pattern comprises a first pattern and a second pattern, the first and second pattern formed by the excitation and the depletion beam respectively. Having two independent patterns, the photolithography apparatus can independently control the excitation and depletion patterns flexibly for example using separate light source systems, light modulation systems.

In an embodiment of the first aspect, within the one or more excitation regions the photochemical reaction of the photosensitive material is activated, while within the one or more depletion regions the photochemical reaction of the photosensitive material is deactivated.

In an embodiment of the first aspect, the absorption of light of the first wavelength by the photosensitive material activates the photochemical reaction inside the volume of photosensitive material by bringing the photosensitive material from a ground state into an excited state and thus producing radicals, while absorption of light of the second wavelength by the photosensitive material deactivates the photoexcitation reaction inside the volume of photosensitive material by bringing the photosensitive material from the excited state back to the ground state, thus depleting radicals. This enables the photolithography apparatus to exploit single photon polymerization process to initiate the photochemical reactions and use depletion-based techniques while not using multiphoton polymerization processes.

In an embodiment of the first aspect, the 3D structure formed is at nano-scale, micro-scale, or macro-scale. The photolithography apparatus disclosed in the present invention is not limited to micro-scale or macro-scale but can be used to realize in those scale regimes. For micro-scale and nano-scale 3D structures, it is preferred to use multiphoton processes or depletion-based techniques or a combination thereof.

In an embodiment of the first aspect, the first wavelength may be shorter than the second wavelength, preferably wherein the first wavelength is between 350-600 nm and the second wavelength is between 450-800 nm. It is noted that the first wavelength relates to excitation and the second wavelength relates to depletion. In general, depletion-based high-resolution technique such as STED uses a depletion beam with a longer wavelength than that of the excitation beam. The possibility of using STED ensures that the photolithography apparatus can maintain a high-resolution and that the reaction can be contained to a single layer in space.

In an embodiment of the first aspect, the photosensitive material is a photoresist or a photopolymer, preferably a photosensitive material that is compatible with stimulated emission depletion (STED) mechanism or photo-induced deactivation (RAPID) mechanism. The compatibility with existing depletion-based techniques ensures the techniques can be used using the disclosed invention.

In an embodiment of the first aspect, when a photochemical reaction activates at a particular position within the volume of photosensitive material, the photosensitive material at that particular position changes from soluble to insoluble or from insoluble to soluble during a subsequent chemical development step. There are two types of photopolymer tone, namely positive and negative tone. The positive tone corresponds to a process changing the photopolymer from insoluble to soluble. The negative tone corresponds to a process changing the photopolymer from soluble to insoluble. One of these two types of photoresists may be preferred in the field of 3D photolithography depending on the application. For example, a positive tone photopolymer may be preferred when the higher resolution or high thermal stability of the print are required, while negative tone photoresists may be preferred to decrease the processing time and cost.

In an embodiment of the first aspect, a substantial region (or a number of disconnected regions) within the one or more modulated images is focused substantially simultaneously.

In an embodiment of the first aspect, the stage is arranged to be moveable in a first and a second direction spanning the focal plane and/or moveable in a third direction orthogonal to the focal plane. The controlled movement along three orthogonal axes can be realized by using a set of XYZ-translational stages with sub-micrometer high-precision.

In an embodiment of the first aspect, the stage and/or the optical system is arranged to be able to alter the location of the focal plane within the volume of photosensitive material such that the 3D structure can be formed layer-by-layer within each altered location of the focal plane. This allows for flexible control over the depth of the focal plane for stacking the layers printed which form the 3D structure.

According to another aspect of the embodiment, the light modulation system may comprise a digital micromirror device (DMD), a digital light processing (DLP) chip, a liquid crystal display (LCD), a liquid crystal on silicon (LCOS), a deformable mirror and/or an organic light emitting diode (OLED).

In an embodiment of the first aspect, the light source system may comprise a light source, the light source being a light emitting diode, a superluminescent diode, a laser or an arc lamp. The light source can operate either in pulse regime (where depletion pulses are synchronised with excitation pulses, typically with a small time delay (nanoseconds to microseconds)) or in continuous wave (CW) regime (where excitation and depletion beams are generated continuously at the same time).

In an embodiment of the first aspect, the light source system may comprise a first light source and a second light source, wherein the first light source produces light of the first wavelength and the second light source produces light of the second wavelength. The separate light source systems allow for flexibility in the entire optical system that each light beam can be modulated in its own path which is not shared with another beam.

In an embodiment of the first aspect, the excitation beam and the depletion beam may have respectively a first and second incident angle with respect to the light modulation system, and wherein the light modulation system is configured to use the difference in incident angle to form the modulated image having the predetermined pattern. In a further preferred aspect, the light modulation system comprises a digital micromirror device (DMD) having multiple micromirrors with a first reflection state and a second reflection state and wherein each of the mirrors in the first reflection state reflects light having the first incident angle towards the three-dimensional volume of photosensitive material and each of the mirrors in the second reflection state reflects light having the second incident angle towards the three-dimensional volume of photosensitive material.

In an embodiment of the first aspect, the excitation beam and the depletion beam may have the same incident angle with respect to the light modulation system, and wherein the light modulation system is configured to use the difference in wavelength of the light in the excitation beam and the depletion beam to form the modulated image having the predetermined pattern. Preferably, the light modulation system has a first reflection state and a second reflection state such that light from the excitation beam and the depletion beam is reflected in the first reflection state towards the three-dimensional volume of photosensitive material through the periodic color filter, while not reflected towards the three-dimensional volume of photosensitive material in the second reflection state. As an alternative to these DMD-based methods, one could use a multi-colour LCD, LCOS or OLED spatial modulator or two monochromatic modulators combined with colour filters in order to simultaneously project patterns excitation/depletion patterns.

In an embodiment of the first aspect, the light modulation system is arranged to form a modulated excitation image having a predetermined excitation pattern using the excitation beam and a modulated depletion image having a predetermined depletion pattern using the depletion beam and wherein the modulated image having the predetermined pattern is formed from the modulated excitation image and the modulated depletion image. Preferably, the light modulation system comprises a first and second digital mirror device, the first digital micromirror device (DMD) arranged to form the modulated excitation image having the predetermined excitation pattern and the second digital micromirror device (DMD) arranged to form the modulated depletion image having the predetermined depletion pattern, and wherein the modulated excitation image and the modulated depletion image are thereafter combined.

In an embodiment of the first aspect, the excitation beam and the depletion beam may have the same incident angle with respect to the light modulation system, and wherein the light modulation system is configured to adapt a focal spot of the depletion beam to have a hollow center such that the one or more excitation regions will be surrounded by depletion regions in the focal plane, preferably wherein the light modulation system comprises a phase plate, more preferably an annular phase plate or vortex phase plate, and wherein the phase plate is arranged to adapt the focal spot of the depletion beam to have a hollow center.

In an embodiment of the first aspect, the predetermined pattern is based on the section of the 3D structure to be formed in the focal plane.

In an embodiment of the first aspect, each of the excitation regions and each of the depletion regions have a predefined area. Preferably, an excitation region that only falls partially within the boundary of the section of the 3D structure to be formed is exposed during a first exposure period and an excitation region that falls completely within the boundary of the section of the 3D structure to be formed is exposed during a second exposure period, the first exposure period being smaller than the second exposure period. More preferably, an excitation region that only falls partially within the boundary of the section of the 3D structure to be formed is exposed using a first intensity and an excitation region that falls completely within the boundary of the section of the 3D structure to be formed is exposed using a second intensity, the first intensity being less than the second intensity. The aspect is further preferred so that the section of the 3D structure to be formed in the focal plane is formed in multiple exposure steps, wherein at each exposure step only a fractional exposure is delivered, and wherein during and/or after each exposure step the stage is moved in a direction parallel or vertical to the focal plane with a displacement smaller than the optical voxel size of the predefined area of the excitation region in that direction. The movement of the stage may be a continuous movement or a step-by-step movement.

In an embodiment of the first aspect, the excitation beam may further comprise light of a third wavelength to activate a photochemical reaction jointly with the light of the first wavelength. In this aspect, a photochemical reaction mechanism using multiple photons, e.g. two-photon polymerization or two-step absorption, may be used jointly with STED technique. The third wavelength can be same or different from the first wavelength. Therefore, either TPP or two-step absorption can be used.

In an embodiment of the first aspect, the present invention may simultaneously excite a large number of points in a 2D layer within a 3D volume of a photosensitive material based on a predetermined pattern or image. Depending on the photochemical reaction used, the predetermined pattern or image may be adjusted so that any unwanted photochemical reaction outside of the targeted 2D layer is avoided.

In a second aspect of the present invention, a photolithography method to activate photochemical reactions according to a predetermined pattern in a layer inside a three-dimensional volume of photosensitive material in order to form a 3D structure therein is disclosed. The photolithography method comprises: providing the volume of photosensitive material on a stage; providing an excitation beam by a light source system, wherein the excitation beam comprises light of a first wavelength, wherein the photochemical reaction inside the volume of photosensitive material is activated by absorption of light of the first wavelength; providing a depletion beam by the light source system, wherein the depletion beam comprises light of a second wavelength, and wherein the photochemical reaction inside the volume of photosensitive material is deactivated by absorption of light of the second wavelength; forming a modulated image by a light modulation system using the excitation beam and the depletion beam; focusing the intensity modulated image by an optical system in a focal plane positioned inside the volume of photosensitive material; forming one or more excitation regions and one or more depletion regions in the focal plane using the focused intensity modulated image having the predetermined pattern, wherein each excitation region comprises light of the first wavelength and each of the depletion regions comprises light of the second wavelength.

In an embodiment of the second aspect, within the one or more excitation regions the photochemical reaction of the photosensitive material is activated, while within the one or more depletion regions the photochemical reaction of the photosensitive material is deactivated such that the photochemical reaction in an out-of-focus region is deactivated, preferably wherein absorption of light of the first wavelength by at least part of the photosensitive material activates the photochemical reaction inside the volume of photosensitive material by bringing the at least part of the photosensitive material from a ground state into an excited state and thus producing radicals, while absorption of light of the second wavelength by the photosensitive material deactivates the photochemical reaction inside the volume of photosensitive material by bringing the at least part of the photosensitive material from the excited state back to the ground state, thus depleting radicals.

In a third aspect of the present invention, a 3D structure is disclosed obtained using the photolithography method according to the second aspect of the present invention.

### BRIEF DESCRIPTION OF DRAWINGS

Embodiments will now be described, by way of example only, with reference to the accompanying schematic drawings in which corresponding reference symbols indicate corresponding parts, and in which:
FIGS. 1A-1D show Jablonski diagrams of single-photon and two-photon absorptions and schematic drawings of single-photon and two-photon polymerization. FIG. 1A shows a Jablonski diagram for single-photon absorption. FIG. 1B shows a Jablonski diagram for two-photon absorption. FIG. 1C shows a schematic illustration of single-photon polymerization. FIG. 1D shows a schematic illustration of two-photon polymerization.
FIGS. 2A-2C show the Jablonski diagrams and schematic illustrations of stimulated emission depletion (STED). FIG. 2A shows a Jablonski diagram for STED. FIG. 2B shows a schematic illustration of STED from angled view. FIG. 2C shows a schematic illustration of a cross section of the excitation beam and the depletion beam in the focal plane.
FIGS. 3 shows an exemplary embodiment of a photolithography apparatus of the present invention.
FIGS. 4A-4B show a technical challenge which occurs in focusing a 2D pattern in a focal plane positioned inside a three-dimensional volume of photosensitive material. FIG. 4A shows a situation of point-by-point laser scanning in TPP and FIG. 4B shows a situation of simultaneous illumination of a pattern.
FIGS. 5A-5C show a rasterization technique to avoid beam overlapping for multiphoton lithography.
FIGS. 6A-6B show an example of a rasterization of excitation and depletion pattern for depletion-based techniques.
FIGS. 7A-7C show different examples of realizing multi-wavelengths illumination systems based on a light modulation system of the DMD type.
FIGS. 8A-8B show a further embodiment of the embodiment of FIG. 7B, wherein the detail of the intermediate optical element 727 is embodied in further details relating to an annular or a vortex phase-plate.
FIGS. 9A-9C show a rasterization method for the boundary 901 of a layer.
FIGS. 10A-10C show exemplary configurations of movement control of the photosensitive material.

The figures are meant for illustrative purposes only, and do not serve as restriction of the scope or the protection as laid down by the claims.

### DESCRIPTION OF EMBODIMENTS

Hereinafter, certain embodiments will be described in further detail. It should be appreciated, however, that these embodiments may not be construed as limiting the scope of protection for the present disclosure.

The invention generally relates to methods and apparatuses for microscale 3D printing using one or more optical patterns using one or more wavelengths of light in combination with photosensitive materials. In particular, the present invention uses two-dimensional (2D) optical patterns to realize a layer-by-layer printing configuration for rapid 3D printing. By confining the optical patterns in a layer at an arbitrary depth and initiating photochemical processes, the invention can rapidly realize a 3D structure by printing 2D layers in a stacked configuration.

Therefore, the present invention proposes a 3D printing device that can have high-resolution but uses a relatively lower power light source system which can lower the cost comparing to the TPP. The examples of lower-cost light source systems include, but are not limited to high-power light-emitting-diodes (LEDs) and long-pulse or continuous wave (CW) lasers. Together with the lower-cost light source systems, it is further desirable to realize a layer-by-layer printing configuration using a predetermined pattern or image which can boost the printing speed significantly compared to TPP. The examples of modulation devices for creating a predetermined pattern or image include, but are not limited to spatial light modulators (SLMs), digital mirror devices (DMDs), liquid crystal display (LCDs), liquid crystal on silicon (LCOSs), organic light emitting diodes (OLEDs) and more.

The invention provides a solution for high-speed, economical, and high-resolution 3D microfabrication using layer-by-layer printing configuration having a sub-micrometre resolution. According to the embodiments of the invention, the sub-micrometre resolution can be achieved by stimulated emission depletion (STED), resolution augmentation through photo-induced deactivation (RAPID), or two-step absorption (TSA).

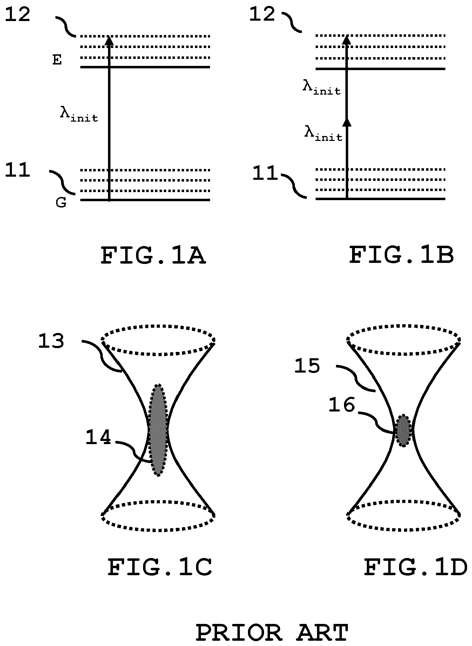

FIGS. 1A-1D show the Jablonski diagrams and schematic illustrations of single-photon and two-photon absorptions which lead to corresponding single-photon and two-photon polymerizations. The energy states of electrons of molecules have discrete energy states. The transition of from one energy state to another energy state can be initiated by absorbing one or more photons. The total energy of the photon(s) equals the energy difference between the initial state (usually called a ground state) and the excited state.

As shown in FIG. 1A, an electron of a photoinitiator molecule can be excited from a ground state 11 to an excited state 12 by absorbing a single photon with a wavelength of λᵢₙᵢₜ. The energy of the photon absorbed by the electron is *hc*/λ*,* wherein *h* is the Planck constant (1.054571817× 10⁻³⁴ J·s) and c is the speed of light (2.99792458×10⁸ meter/second).

FIG. 1B shows a different absorption scheme where two photons are absorbed almost simultaneously (typically within few femtoseconds) for electron excitation, from a ground state 11 to an excited state 12. The energy of one of these photons would not be enough to go from a ground state to an excited state; however, the combined energy of the two photons, *2hc*/λᵢₙᵢₜ*,* is absorbed to create a radical. It is worthy to note that the relation between the number of radicals and the intensity of light, /*,* can be different in single- and two-photon cases. In case of single-photon absorption, the number of radicals is linearly proportional to *I.* In contrast, in two-photon absorption the number of radicals is proportional to *I*². Due to the requirement of two photons being absorbed almost simultaneously, the two-photon absorption requires a significantly higher number of photons to initiate the polymerization process. Hence a light beam of high peak intensity on the order of 10¹² W/cm², is typically required for TPP processes.

FIG. 1C shows a schematic illustration of single-photon polymerization process. A light beam 13 is focused within a photosensitive material and creates a focal spot where the light intensity *I* or the number of photons is the largest within the smallest cross-sectional area of the beam. The intensity of light *I* rapidly diminishes along any direction away from the focal spot. The absorption of photons by the photoinitiator molecules leads to generation of radicals which induce the photochemical reaction at a rate proportional to the light intensity *I.* The volume where the rate of the photochemical reaction is significant can be called a voxel 14. However, in single-photon polymerization, the voxel may not have a sufficiently sharp boundary. Moreover, focusing multiple beams in the vicinity of each other will lead to severe loss of vertical resolution due overlap between the beams. This prevents the use of single-photon polymerization for 3D printing, unless the polymerization volume is not constrained vertically via additional mechanisms (e.g. high absorption of light in SLA).

FIG. 1D shows a schematic illustration of two-photon polymerization process. Similar to the single-photon polymerization, a light beam 15 is focused and creates a focal spot where the number of photons is the largest. If the light beam 15 has a wavelength that is suitable for two-photon absorption of the radical molecule in the photoresist, the number of radicals produced by this beam is proportional to *I*² and is extremely small outside the focal spot. As a result, voxel 16 is smaller and has sharper boundaries than the one formed by single-photon polymerization. In this case, vertical resolution does not suffer from sequential exposure of adjacent locations, which enables printing in 3D space.

Depending of the tone of photosensitive material (e.g. photoresist or photopolymer), negative tone or positive tone, a liquid photoresist can be solidified or a solid photoresist can become soluble respectively. The definition of tone is identical in single-photon and two-photon polymerizations.

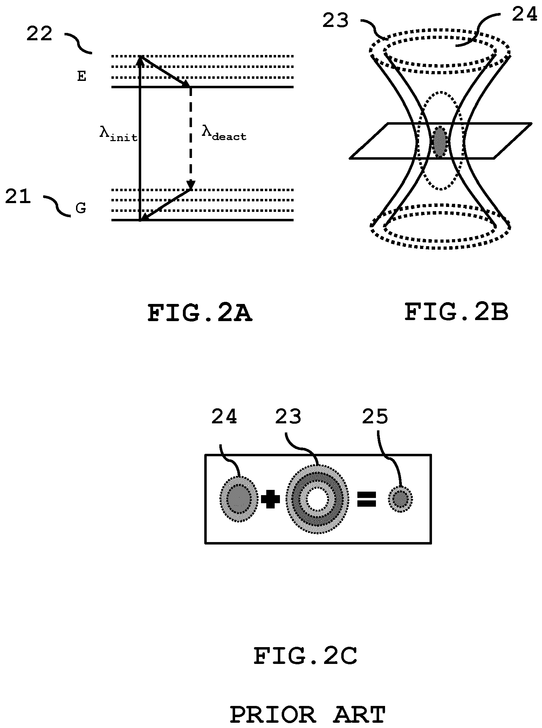

FIGS. 2A-2C show the Jablonski diagrams and schematic illustrations of stimulated emission depletion (STED). This technique is well known in the field of microscopy where high resolution images are realized and is also demonstrated in the field of 2D lithography.

FIG. 2A shows a Jablonski diagram for STED. An excitation wavelength λᵢₙᵢₜ excites an electron from a ground state 21 to an excited state 22. Subsequently the excited electron can produce a radical which initiates a photochemical reaction in a positive tone or a negative tone photoresist. However, if at the same location a deactivating/depleting beam is present comprising of light having a depletion wavelength wavelength λ_{deact}, the deactivating/depleting beam will stimulate an energy transition from the excited state 22 to the ground state 11 in a very short time. Therefore, effectively the electrons are prohibited to stay in the excited states long enough to produce radicals. The production of radicals (and polymerization) can thus substantially only occur where there is no deactivating/depleting beam.

FIG. 2B shows a schematic illustration of STED in angled view. A hollow or donut-shaped focal spot of the depletion beam 23 is aligned or centered with the focal spot of the excitation beam 24. In the region exposed to the depletion beam 23, and the region simultaneously exposed to the depletion beam 23 and the excitation beam 23, there will be no photochemical reaction due to presence of the depletion beam 23. Substantially only in the central region exposed to only the excitation beam 24, the radicals will be produced initiating the photochemical reaction. This way, the polymerization can be prevented in the out-of-focus region of the excitation beam.

FIG. 2C schematically shows the cross sections of the depletion beam 23 and the excitation beam 24. When the two beams are centrally aligned, the centre of the region 25 will only have the excitation beam 24 and rest of the area will be exposed to both the excitation beam 24 and the depletion beam 23 or only by the depletion beam 23. Again, it is noted that only the centre region 25 without the depletion beam will produce radicals which initiate the photochemical reaction. As shown in FIG. 2C, the focal spot of the depletion beam 23 can have a donut-shape. This donut-shaped focal spot of the depletion beam 23, more generally a shape with a hollow centre, may be formed interferometrically by different methods known in the field. For example, such focal spots may be created by placing phase-plates (typically annular or vortex type) or phase modulators in the incident light beam.

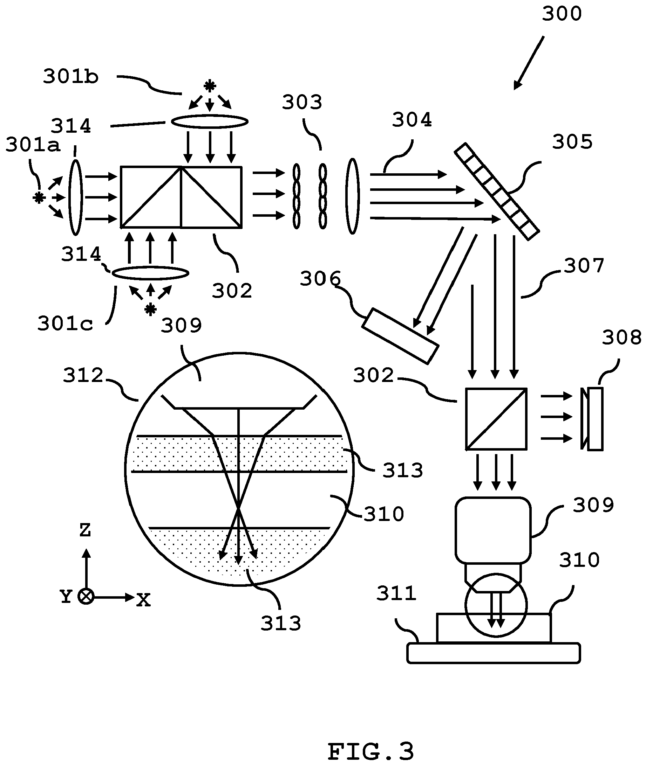

FIG. 3 shows an exemplary embodiment of a photolithography apparatus 300 of the present invention. The photolithography apparatus 300 is configured to print a 2D layer based on a predetermined pattern. The layer-by-layer accumulation of the 2D layers subsequently forms a target 3D structure. Before printing, the target 3D structure is first digitally converted to a set of cross-sections, also referred as a set of layers or a set of slices. The present invention differs from point-by-point TPP configuration at least in that a layer is printed simultaneously (or in a small number of steps) within a photosensitive material based on a predetermined pattern.

A light modulation system 305 is arranged to form one or more modulated intensity images or light patterns using one or more light beams. The modulated intensity image or modulated image comprises or generates the light patterns that form excitation and depletion regions in the focal plane. The light pattern can comprise excitation pixels and depletion pixels, which result in voxels in the focal plane being excited or depleted accordingly. Each excitation pixel and depletion pixel is shaped by the light modulation system 305. The one or more light beams may have same or different wavelengths. If STED technique is used, one light beam may be an excitation beam of the excitation wavelength and another light beam may be a depletion beam of the depletion wavelength of the photosensitive material used. The light modulation system 305 is arranged to generate arbitrary light patterns comprising of for example millions of points or pixels that can be switched on and off over a time-span down to microseconds. Any spatial light modulation technique known in the field can be used. As an example, FIG. 3 shows a schematic of a digital mirror device (DMD) as an exemplary embodiment of the light modulation system 305.

As shown in FIG. 3, a light source system 301a-c is arranged to produce one or more light beams at one or more wavelengths. The light source system 301a-c can be any known optical device that generates a light beam such as a laser, superluminescent diode, arc lamp or a light emitting diode (LED). Preferably, the one or more light beams are shaped into an even, flat wavefront (or a Gaussian-shape) with a controlled numerical aperture. This can be done for example using a collimating lens 314 followed by 'fly eye' microlens arrays and a field lens 303. In the case of using a coherent light source like a laser, diffraction elements can also be used for shaping the beam with a desired shape. The shaped light beam 304 is then incident on a light modulation system 305, in this embodiment exemplified with a DMD matrix 305. The DMD matrix 305 then forms one or more modulated images using the one or more light beams generated by the light source system 301a-c at one or more wavelengths. The unwanted portion of the shaped light beam 304 is reflected by the off-state mirrors (pixels) of the DMD matrix 305 and is directed into a beam stop 306. The one or more modulated images formed by the light modulation system 305 is reflected to an optical system 309 arranged to focus the one or more modulated images in a focal plane positioned inside a three-dimensional volume of a photosensitive material 310 which is also referred as photosensitive material. The optical system 309 may de-magnify the one or more modulated images and increase the resolution and numerical aperture according to the need of the printing session. Each pixel of the DMD matrix 305 produces a light beam that is focused inside the photosensitive material 310 after propagating through the optical system 309. The position of the focal plane on which all beams are focused can be changed by controlling the relative position between the photosensitive material and the focused one or more modulated images. The relative position can be changed by three-dimensional movement of XYZ-translational stages 311 that is holding the volume of photosensitive material 310. Another possibility of changing the relative position between the focused one or more modulated images and the photosensitive material 310 is the axial movement of the optical system 309. By axial movement in this context, it means the movement along the direction that the beams are propagating. The relative position can also be controlled by using dynamically adjustable adaptive optics such as deformable mirrors or liquid crystal on silicon (LCOS) spatial light modulators. The control of the relative position is relevant also in the contexts of super-resolution effects and aberration control.

The circle located around the photosensitive material 310 is zoomed in as a zoomed-in view 312. In this embodiment the photosensitive material 310 is sandwiched between two cover glasses 313 located on the XYZ-translational stages 311. It is worthy of note that the present invention is not limited to this particular configuration of the photosensitive material 310 relative to the optical system 309. Various configurations are standardized in the field of 3D photolithography. The examples of configurations are, along the light beam path: (i) objective lens-air-cover glass-photosensitive material, (ii) objective lens-air-photosensitive material, (iii) objective lens-immersion medium-cover glass-photosensitive material, (iv) objective lens-immersion medium-photosensitive material, and (v) objective lens-photosensitive material (also known as Dip-In configuration).

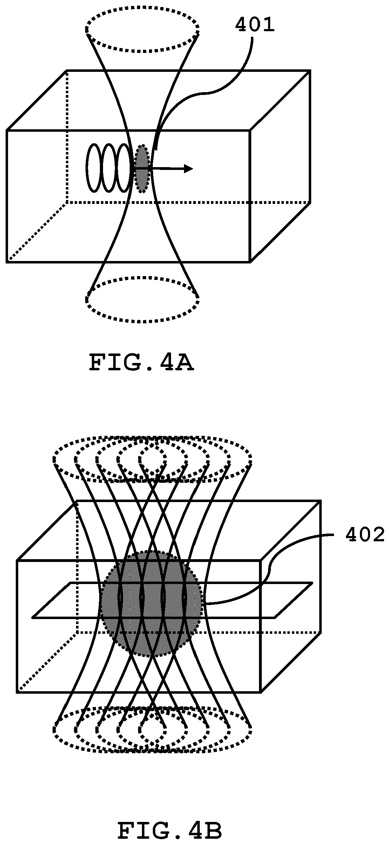

FIGS. 4A-B show a technical challenge which occurs in focusing a 2D pattern in a focal plane positioned inside a three-dimensional volume of photosensitive material. FIG. 4A shows a situation of point-by-point laser scanning for example conventional scanning-based TPP lithography. In this point-by-point configuration, the photochemical reaction is always confined within a single focal spot of the beam. In contrast, FIG. 4B shows a situation of simultaneous illumination of a pattern. In this configuration, a 2D pattern is simultaneously projected onto a focal plane by a light modulation system such as a DMD. Due to the overlapping of the beam paths of each beam from different pixels of the DMD, the volume of photochemical reaction can be expanded as opposed to a predetermined pattern, hence losing the spatial resolution defined in the predetermined pattern.

In multiphoton lithography such as classical TPP or other multi-step absorption processes, the radial production rate is proportional to *I*² (or *I*ⁿ, n > 1) for single wavelength process, or in case of multi-wavelengths *I*₁ ∗ *I*₂ (for n = 2). Hence, the number of unwanted radicals produced in the out-of-focus region by a scanning beam in point-by-point regime is proportional to the sum of squares of beam intensity *ΣI*² over the number of beam positions and in simultaneous pattern projection regime, to the square of the sum of beam intensities *(Σ I)*² over the number of beams. The latter being significantly larger.

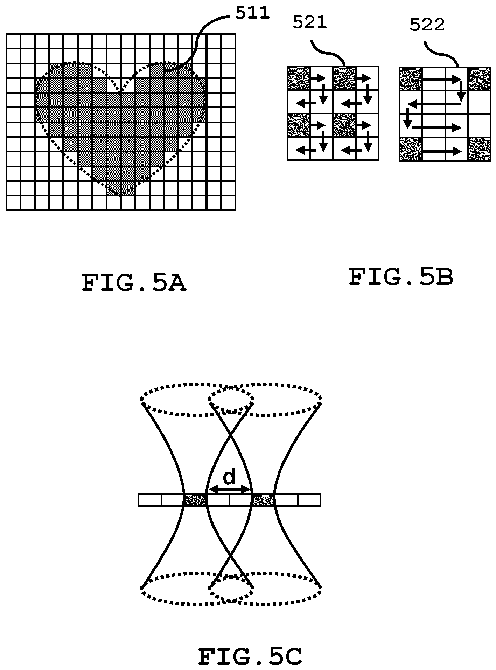

FIGS. 5A-C illustrate a rasterization technique that can be used to reduce beam overlapping effects in simultaneous projection regime when TPP or other multi-step process are employed. FIG. 5A shows a cross-section, or a layer of a 3D structure to be rasterized. In this example, the layer is a heart shape. Simultaneous illumination of all voxels will result in the overlapping problem depicted in FIG. 4A-B. Therefore, the illumination of the layer is divided into *k* steps each comprising different patterns. As shown in FIG. 5B, in each pattern, the closest voxels are separated by a minimum distance. In case of the first pattern 521, the closest voxels have a minimum distance of one voxel (edge-to-edge distance). In order to fill the entire area, the pattern has to be printed in 4 steps (*k* = 4) as indicated by the arrows in FIG. 5B. Similarly, for the second pattern 522, the closest voxels have a minimum distance of two voxels, therefore, the pattern has to be printed in 9 steps (*k* = 9). The minimum distance d is indicated in FIG. 5C. In the shown rectangular rasterization example, the relationship between k and d is *k* = (*d*+1)²*,* wherein *d* is the number of empty voxels between the closest illuminated voxels. Assuming that all voxels of the layer need to be exposed and that one out of k voxels is exposed during each step, the intensity of out-of-focus light will be proportional to 1/k and the number of unwanted radicals generated by each step is ~1/k². Hence, after k steps, the number of unwanted radicals is ~k/k² or ~1/k, or 1/(d+1)². The parameters *k* and *d* can be adjusted layer-by-layer, depending on the number of unwanted radicals that can be tolerated by the target 3D structure. Even though the examples in FIG. 5B are shown as periodic, it is worthy of note that the pattern can be arbitrary in shape, only characterized by the minimum distance between the closest illuminated voxels.

As discussed earlier, depletion-based methods such as STED and RAPID can be used for achieving high resolution while not necessarily using multiphoton absorption. These methods allow to further increase the speed of printing and lower the capital cost by enabling 3D printing based on single-photon absorption and, hence, requiring substantially lower light intensities. The depletion-based methods can spatially confine the production of radicals to a single layer via simultaneous projection of excitation and depletion illumination patterns wherein the out-of-focus regions of the excitation beams are deactivated by the overlapping out-of-focus depletion beams. The processes of excitation and depletion may be both based on a single-photon absorption or on multi-photon absorption.

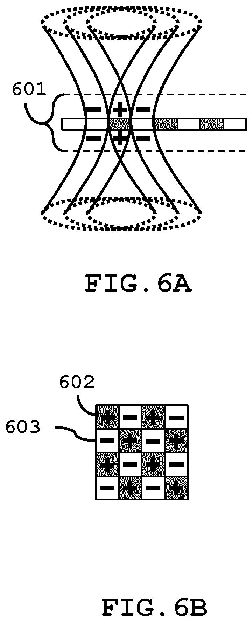

An example of a rasterization of excitation and depletion pattern is shown in FIGS. 6A-B. The voxels are illuminated alternatingly between the excitation wavelength 602 and the depletion wavelength 603. After a sufficient exposure time when the voxels designated with excitation beam are polymerized, the pattern is inverted so that the entire area can be polymerized without over-polymerizing any unwanted area in and out of the focal plane. The present invention is not limited by the alternating pattern shown in FIG. 6B. The excitation voxels can be completely surrounded by the depletion voxels that is one excitation voxels is surrounded by nine depletion voxels, or any other number as desired. However, in that case, a higher number of steps will be required to expose all of the voxels of the layer. The number of neighbouring excitation voxels can also be designed with a desired number, not necessarily limited to one depending on the target 3D structure.

An example of photosensitive material which may be used for the above-described depletion-based technique can be found in Y. Xu et al., "Radical Photopolymerization Using 1,4-Dihydropyrrolo[3,2-b]pyrrole Derivatives Prepared via One-Pot Synthesis ", ACS Omega 2021 6 (32), 20902 (2011*).* In general, given a printing area of 1 mm², each layer can be produced in milliseconds with a light source with power of approximately 1 Watt.

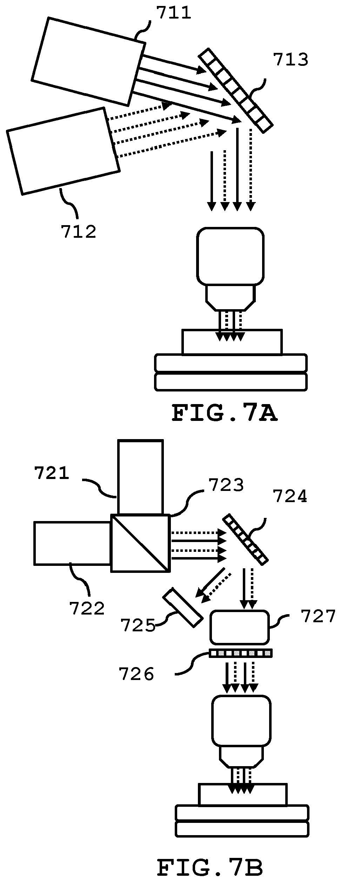

FIGS. 7A-7C show different examples of realizing multi-wavelengths illumination systems based on a light modulation system. The illumination systems are arranged to form one or more modulated images in a focal plane positioned inside the three-dimensional volume of photosensitive material, wherein the focused one or more modulated images can generate a predetermined pattern comprising one or more excitation regions and one or more depletion regions in the focal plane, wherein each excitation region comprises light of a first wavelength and each of the depletion regions comprises light of a second wavelength. The excitation region at each point in time is configured to initiate the photochemical reaction within the boundary of the printed layer.

A light modulation system can comprise but is not limited to spatial light modulators (SLMs), digital mirror devices (DMDs), liquid crystal display (LCDs), liquid crystal on silicon (LCOSs) and/or organic light emitting diodes (OLEDs). In this embodiment, however, DMD is used as a representative example. In general, commercial RGB projectors based on DMDs are not configured to emit various wavelengths simultaneously. Instead, it quickly switches between three wavelengths (red, green, blue) and appears to human eyes as presenting multiple colors at the same time, which is not technically correct and suitable for depletion-based techniques. Typically for a depletion-based technique like STED, the photoinitiator molecules have to be deactivated within nanoseconds to microseconds for the photosensitive material to be effectively depleted.

FIG. 7A shows an embodiment of a two-wavelengths illumination system using the on- and off-state of the micromirrors of a DMD. In regular use, arrays of micromirrors in a DMD are designed to reflect the incident light at two angles, one in the direction of the optical system for continuation of optical processes (on-state) and another one in the direction of a beam stop (off-state). By reversing the process, a DMD can reflect, two incident beams coming from different angles into a same direction.

The light beams are then fed to the optical system and are focused to form respective patterns within a photosensitive material. When the two angles are used by an excitation beam and a depletion beam respectively, a modulated image for excitation is formed by one of the on- and off- state of the micromirrors and a modulated image for depletion is formed by the remaining state of the micromirrors. The excitation beam can use light for example between 350 nm and 600 nm (depends on the initiator), while the depletion beam can use light between 450 nm and 800 nm. Usually, the depletion light is shifted to red compared with the excitation light.

In this configuration, it is not necessary to use a beam stop. This configuration for illumination can be used combinedly with the multi-step rasterization described in FIG.6A-6B to avoid unwanted photochemical reactions in and out of the focal plane. For example, for printing a connected area, 50% of the pixels can be used for excitation while the remaining 50% of the pixels are used for depletion. By switching the state between on- and off-states of the micromirrors, the area can be printed (filled) without having unwanted photochemical reactions. The switching of the excitation and depletion regions can also be done by lateral movement of the photosensitive material or the illumination system. Using XYZ-translational stages, one can move the photosensitive material in the lateral direction, perpendicular to the optical axis to ensure every target voxel undergo photochemical reaction. It may be preferred in some cases to have a moving illumination system and stationary stage with the photosensitive material. In case of using XYZ-translational stages, the boundary of the printed area has to be dynamically adjusted according to the boundary of the predetermined pattern for the layer.

FIG. 7B shows an embodiment of a two-wavelengths illumination system wherein the light from the excitation light source 721 and an depletion light source 722 may be combined by a beam splitter or a dichroic mirror 723 in that both excitation and depletion wavelengths are simultaneously projected by the on-sate of the DMD pixels 724 or stopped by a beam stop 725 in off-state. In this configuration, the DMD pixels 724 can contain an image of the entire layer to be printed. Application of a periodic excitation-depletion pattern using one or more patterns can be carried out by a second DMD pixels or a periodic color filter 726 positioned after an intermediate optical element 727.

The periodic modulation of wavelength on the DMD can also be formed by the optics positioned before the DMD instead of a periodic colour-filter after the DMD

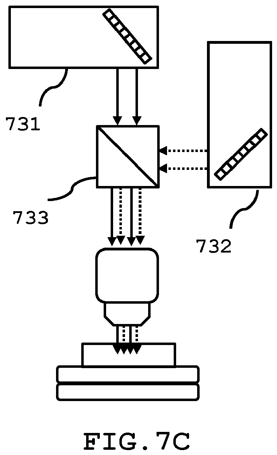

FIGS. 7C shows an embodiment of a two-wavelengths illumination system wherein two DMD chips 731, 732 are each coupled to a separate light source system. One light source system operates at the excitation wavelength and the other light source system operates at the depletion wavelength. The modulated image for excitation formed by the first DMD chip 731 and the modulated image for depletion formed by the second DMD chip 732 are combined via a beam splitter or dichroic mirror 733 and fed to the optical system for the remaining lithography processes. This configuration allows for separate projection of excitation and depletion patterns in arbitrary shapes.

The absorption of light of the first wavelength by the photoinitiator or photosensitizer molecules activates the photochemical reaction inside the volume of photosensitive material by bringing the molecules from a ground state into an excited state and thus producing chemically reactive species, while absorption of light of the second wavelength by the photosensitive material deactivates the photochemical reaction inside the volume of photosensitive material by bringing the molecules from the excited state back to the ground state, thus depleting chemically reactive species.

Photosensitive material may consist of a mixture of monomers, oligomers, photoinitiators, co-initiators, photosensitisers, inhibitors etc. Typically, the initiators, sensitisers and co-initiators become excited as a result of photoexcitation, initiating the photochemical reaction.

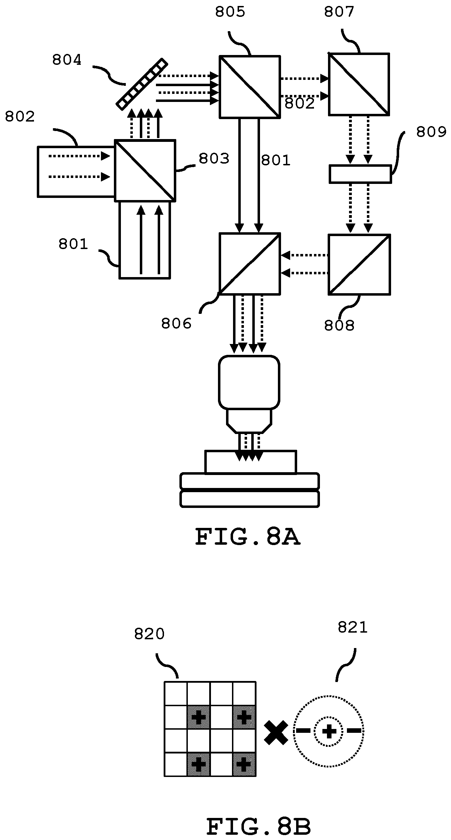

FIGS. 8A-8B show a further embodiment of the embodiment of FIG. 7B, wherein the detail of the intermediate optical element 727 is embodied in further detail relating to an annular or a vortex phase-plate. An excitation beam 801 and a depletion beam 802 are combined by a beam splitter or a dichroic mirror 803 before being reflected by a DMD 804. After passing through the DMD 804, the excitation beam 801 and the depletion beam 802 have a same pattern 820 as shown in FIG. 8B, where each excitation voxel or focal spot is surrounded by a donut-shaped depletion focal spot. After reflecting from the DMD 804, the excitation beam 801 and the depletion beam 802 are spatially divided and directed into two beam paths respectively by a second beam splitter or dichroic mirror 805. The two beams are recombined by a third beam splitter or dichroic mirror 806 after the depletion beam 802 propagating through a phase-plate 809 or any other intermediate optical element that can create a annular or a vortex phase front of a beam 821. Along the path, the depletion beam 802 is re-directed by mirrors 807, 808 to the third beam splitter or dichroic mirror 806 and recombines with the excitation beam 801. The excitation beam 801 and the depletion beam 802 are then combined and fed into an optical system. As described earlier, the excitation beam 801 and the depletion beam 802 have a same pattern after reflecting from the DMD 804. However, due to the additional modulation of the depletion beam by a phase-plate 809, the depletion beam will have a donut-shape focal spot 821 when focused as shown in FIG. 8B. The optical system can then be arranged to focus the modulated images in a focal plan positioned inside the three-dimensional volume of photosensitive material, wherein the focused modulated images generate the predetermined pattern comprising one or more excitation regions and one or more depletion regions in the focal plane, wherein each excitation region comprises light of the excitation wavelength and each of the depletion regions comprises light of the depletion wavelength.

Instead of the phase-plate 809, a second separate modulator such as a deformable mirror or LCOS can be used to form the hollow beam and further correct for optical aberrations. Preferably, every excitation voxel will be surrounded by depletion light when it is focused inside the photosensitive material to avoid unwanted photochemical reaction in and out of the focal plane. It is noted that the light modulation system can be any known modulation device known in the field of light modulation.

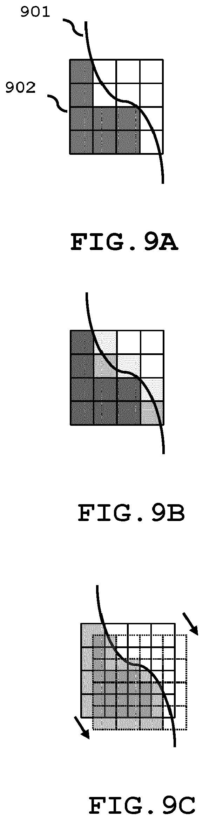

FIGS. 9A-9C show a rasterization method for the boundary 901 of a layer. FIG. 9A shows a general configuration where all voxels within a target region 902 are exposed with a same optical power of the light beam. FIG. 9B shows a preferred configuration where the voxels traversed by the boundary 901 is partially exposed relative to the full exposed voxels as in FIG. 9A. The adjustment of the exposure is carried out by adjusting the time of the on-state of the corresponding individual pixels in the excitation pattern accordingly. In a more preferred configuration, the layer is printed in multiple steps, where at each step all relevant voxels are partially exposed while the complete exposure is achieved by a sub-voxel movement of the photosensitive material as shown in FIG. 9C. This configuration helps to realize a smoother boundary than the earlier configuration relating to FIG. 9A and FIG. 9B. The sub-voxel movement of the photosensitive material can be carried out in a step-by-step motion or a continuous motion by XYZ-translational stages.

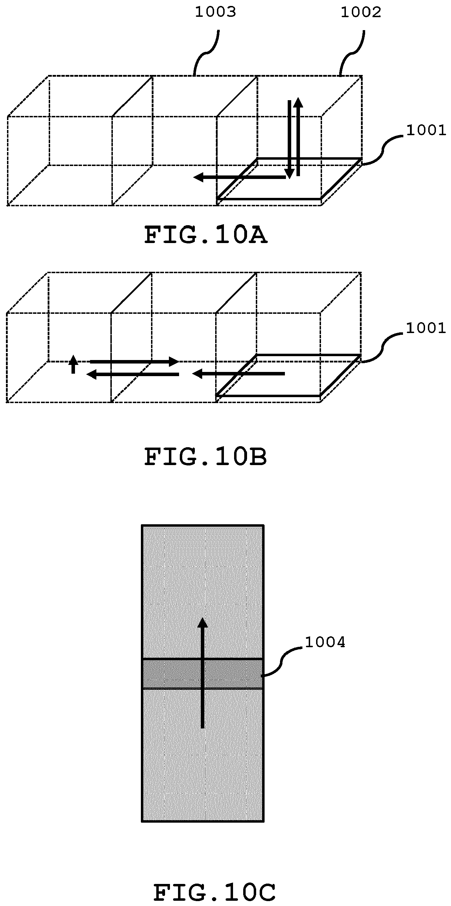

FIGS. 10A-10C show exemplary configurations of movement control of the photosensitive material.

The photosensitive material can be mounted on a stack of high-precision XYZ-translational stages. Alternatively, the illumination system may be mounted on a translation stage along one or more dimensions instead. The translation in Z direction is used to adjust the depth of the focal plane created by the optical system of a photolithography apparatus during layer-by-layer printing. The Z direction movement can also be done by controlling the Z-position of the optical system by for example a height-adjustable microscope. X and Y direction movements can move the photosensitive material horizontally in the plane perpendicular to the axis of the light beam. The X and Y direction movements allow for printing an area that is larger than the maximal illumination area by stitching or tiling the illuminated patterns. Movement in any direction can be either a step-by-step movement or a continuous movement. Since the movement of the photosensitive material is effectively moving the relative position of the focal plane comprising the focused modulated images, the movement can be depicted indirectly by the changes in position of the focused modulated images.

FIG. 10A shows a printing configuration where a focused modulated image 1001 first moves vertically to print all layers of a first block 1002, completing the photochemical reactions designated to the volume occupied by the first block 1002. After finishing the first block, the focused modulated image 1001 is moved back to the initial vertical position then moved horizontally to a second block 1003. Subsequently, the same vertical movement follows.

FIG. 10B shows a printing configuration where a focused modulated image 1001 first moves horizontally to print the layers of all blocks that are at a first vertical position. After completing the layers of the first vertical position, the focused modulated image 1001 is moved back to the original horizontal position and then moved vertically to a second vertical position. Afterwards, the same horizontal movement follows.

If a horizontal movement is performed after and not during an exposure of one area, it is preferred to have a transitional zone 1004 between two adjacent illumination areas to avoid discontinuity in the printed structure as shown in FIG. 10C. In the transitional zone the optical power may have a ramp-shaped profile to ensure smooth transition between adjacent exposure areas. If a horizontal movement is preferred for example smoothening the boundary, a continuous movement is preferred during the exposure.

Two or more of the above embodiments may be combined in any appropriate manner. While in some embodiments the photosensitive material was used which reacts via a photopolymerization reaction, in general each of the embodiments is equally applicable to the use of a photosensitive material which reacts via other types of photochemical reactions.

## Claims

1. A photolithography apparatus for forming a three-dimensional structure inside a three-dimensional volume of photosensitive material configured to activate photochemical reactions according to a predetermined pattern in a layer inside the three-dimensional volume of photosensitive material, comprising:
a stage arranged to hold the volume of photosensitive material;
a light source system arranged to produce an excitation beam, wherein the excitation beam comprises light of a first wavelength, wherein the photochemical reaction inside the volume of photosensitive material is activated by absorption of light of the first wavelength and further arranged to produce a depletion beam, wherein the depletion beam comprises light of a second wavelength, and wherein the photochemical reaction inside the volume of photosensitive material is deactivated by absorption of light of the second wavelength;
a light modulation system arranged to form one or more modulated images using the excitation beam and the depletion beam;
an optical system arranged to focus the one or more modulated images in a focal plane positioned inside the three-dimensional volume of photosensitive material;
wherein the focused one or more modulated images generate the predetermined pattern comprising one or more excitation regions and one or more depletion regions in the focal plane, wherein each excitation region comprises light of the first wavelength and each of the depletion regions comprises light of the second wavelength.

2. The photolithography apparatus according to claim 1, wherein the modulated image is intensity modulated and/or spatially modulated;
and/or wherein the predetermined pattern comprises a first pattern and a second pattern, the first and second pattern formed by the excitation beam and the depletion beam respectively; and/or wherein within the one or more excitation regions the photochemical reaction of the photosensitive material is activated, while within the one or more depletion regions the photochemical reaction of the photosensitive material is deactivated such that the photochemical reaction in an out-of-focus region is deactivated.

3. The photolithography apparatus according to any one of the preceding claims, wherein absorption of light of the first wavelength by at least part of the photosensitive material activates the photochemical reaction inside the volume of photosensitive material by bringing the at least part of the photosensitive material from a ground state into an excited state and thus producing radicals, while absorption of light of the second wavelength by the photosensitive material deactivates the photochemical reaction inside the volume of photosensitive material by bringing the at least part of the photosensitive material from the excited state back to the ground state, thus depleting radicals.

4. The photolithography apparatus according to any one of the preceding claims, wherein the 3D structure formed is at nano-scale, micro-scale, or macro-scale;
and/or wherein the first wavelength is shorter than the second wavelength, preferably wherein the first wavelength is between 350-600 nm and the second wavelength is between 450-800 nm;
and/or wherein the photosensitive material is a photoresist or a photopolymer, preferably a photosensitive material that is compatible with stimulated emission depletion (STED) mechanisms or photo-induced deactivation (RAPID) mechanisms; preferably wherein when a photochemical reaction activates at a particular position within the volume of photosensitive material, the photosensitive material at that particular position changes from soluble to insoluble or from insoluble to soluble during a subsequent chemical development step.

5. The photolithography apparatus according to any one of the preceding claims, wherein a substantial region within the one or more modulated images is focused substantially simultaneously;
and/or wherein the stage is arranged to be moveable in a first and a second direction spanning the focal plane and/or moveable in a third direction orthogonal to the focal plane;
and/or wherein the stage and/or the optical system is arranged to be able to alter the location of the focal plane within the volume of photosensitive material such that the 3D structure can be formed layer-by-layer within each altered location of the focal plane;
and/or wherein the light modulation system comprises a digital micromirror device (DMD), a digital light processing (DLP) chip, a liquid crystal display (LCD), a liquid crystal on silicon (LCOS), a deformable mirror and/or an organic light emitting diode (OLED).

6. The photolithography apparatus according to any one of the preceding claims, wherein the light source system comprises a light source, the light source being a light emitting diode, a superluminescent diode, a laser or an arc lamp; preferably wherein the light source system comprises a first light source and a second light source, wherein the first light source produces light of the first wavelength and the second light source produces light of the second wavelength.

7. The photolithography apparatus according to any one of the preceding claims, wherein the excitation beam and the depletion beam have respectively a first and second incident angle with respect to the light modulation system, and wherein the light modulation system is configured to use the difference in incident angle to form the modulated image having the predetermined pattern forming a wavelength-modulated image where the one or more excitation and depletion regions are present at the same time,
preferably wherein the light modulation system comprises a digital micromirror device (DMD) having multiple micromirrors with a first reflection state and a second reflection state and wherein each of the micromirrors in the first reflection state reflects light having the first incident angle towards the three-dimensional volume of photosensitive material and each of the mirrors in the second reflection state reflects light having the second incident angle towards the three-dimensional volume of photosensitive material via the optical system.

8. The photolithography apparatus according to any one of the preceding claims, wherein the excitation beam and the depletion beam have the same incident angle with respect to the light modulation system, and wherein the light modulation system is configured to use the difference in wavelength of the light in the excitation beam and the depletion beam to form the modulated image having the predetermined pattern,
preferably wherein the light modulation system has modulation elements having a first state and a second state such that light from the excitation beam and the depletion beam is reflected and/or transmitted by the modulation elements in the first state towards the three-dimensional volume of photosensitive material through the periodic color filter, while not reflected and/or transmitted by the modulation elements in the second state towards the three-dimensional volume of photosensitive material.

9. The photolithography apparatus according to any one of claims 1-7, wherein the light modulation system is arranged to form a modulated excitation image having a predetermined excitation pattern using the excitation beam and a modulated depletion image having a predetermined depletion pattern using the depletion beam and wherein the modulated image having the predetermined pattern is formed from the modulated excitation image and the modulated depletion image,
preferably wherein the light modulation system comprises a first and second digital mirror device, the first digital micromirror device (DMD) arranged to form the modulated excitation image having the predetermined excitation pattern and the second digital micromirror device (DMD) arranged to form the modulated depletion image having the predetermined depletion pattern, and wherein the modulated excitation image and the modulated depletion image are thereafter combined.

10. The photolithography apparatus according to any one of claims 1-7, wherein the excitation beam and the depletion beam have the same incident angle with respect to the light modulation system, and wherein the light modulation system is configured to adapt a focal spot of the depletion beam to have a hollow center such that the one or more excitation regions will be surrounded by depletion regions in the focal plane, preferably wherein the light modulation system comprises a phase plate, more preferably an annular phase plate or vortex phase plate, and wherein the phase plate is arranged to adapt the focal spot of the depletion beam to have a hollow center;
and/or wherein the predetermined pattern is based on the section of the 3D structure to be formed in the focal plane.

11. The photolithography apparatus according to any one of the preceding claims, wherein each of the excitation regions and each of the depletion regions have a predefined area; preferably wherein an excitation region that only falls partially within the boundary of the section of the 3D structure to be formed is exposed during a first exposure period and an excitation region that falls completely within the boundary of the section of the 3D structure to be formed is exposed during a second exposure period, the first exposure period being smaller than the second exposure period.

12. The photolithography apparatus according to claim 11, wherein an excitation region that only falls partially within the boundary of the section of the 3D structure to be formed is exposed using a first intensity and an excitation region that falls completely within the boundary of the section of the 3D structure to be formed is exposed using a second intensity, the first intensity being less than the second intensity;
and/or wherein the section of the 3D structure to be formed in the focal plane is formed in multiple exposure steps, wherein at each exposure step only a fractional exposure is delivered, and wherein during and/or after each exposure step the stage is moved in a direction parallel or vertical to the focal plane with a displacement smaller than the voxel size of the predefined area of the excitation region in that direction; preferably wherein the movement of the stage is a continuous movement or a step-by-step movement;
and/or wherein the excitation beam further comprises light of a third wavelength to activate a photochemical reaction jointly with the light of the first wavelength; preferably wherein the third wavelength can be same or different from the first wavelength.

13. A photolithography method to activate photochemical reactions according to a predetermined pattern in a layer inside a three-dimensional volume of photosensitive material in order to form a 3D structure therein, comprising:
providing the volume of photosensitive material on a stage;
providing an excitation beam by a light source system, wherein the excitation beam comprises light of a first wavelength, wherein the photochemical reaction inside the volume of photosensitive material is activated by absorption of light of the first wavelength;
providing a depletion beam by the light source system, wherein the depletion beam comprises light of a second wavelength, and wherein the photochemical reaction inside the volume of photosensitive material is deactivated by absorption of light of the second wavelength;
forming a modulated image by a light modulation system using the excitation beam and the depletion beam;
focusing the intensity modulated image by an optical system in a focal plane positioned inside the volume of photosensitive material;
forming one or more excitation regions and one or more depletion regions in the focal plane using the focused intensity modulated image having the predetermined pattern, wherein each excitation region comprises light of the first wavelength and each of the depletion regions comprises light of the second wavelength.

14. The photolithography method according claim 13, wherein within the one or more excitation regions the photochemical reaction of the photosensitive material is activated, while within the one or more depletion regions the photochemical reaction of the photosensitive material is deactivated such that the photochemical reaction in an out-of-focus region is deactivated,
preferably wherein absorption of light of the first wavelength by at least part of the photosensitive material activates the photochemical reaction inside the volume of photosensitive material by bringing the at least part of the photosensitive material from a ground state into an excited state and thus producing radicals, while absorption of light of the second wavelength by the photosensitive material deactivates the photochemical reaction inside the volume of photosensitive material by bringing the at least part of the photosensitive material from the excited state back to the ground state, thus depleting radicals.

15. A 3D structure obtained using the photolithography method according to any one of claims 13-14.
